# EUROPEAN PATENT APPLICATION

(11) **EP 1 300 604 A2**
(43) Date of publication of application: **09.04.2003**
(21) Application number: 02352018.2
(22) Date of filing: 26.09.2002
(51) Int. Cl.: F16G 13/00

(54) **Loop chain structure**

(30) Priority: 04.10.2001 JP 2001308688
(71) Applicant: Hara, Yutaka, Asahikawa-shi, Hokkaido (JP)
(72) Inventor: Hara, Yutaka, Asahikawa-shi, Hokkaido (JP)
(74) Representative: Morelle, Guy Georges Alain

(57) **Abstract**

It is an object of the present invention to provide a loop chain that has a desirable appearance in terms of design and is provided with attaching members (3a,4a), which are easily attachable to and detachable from the loops (2), and yet do not readily come off, and which are provided with either a light-emitting member or light-reflecting member. In a loop chain structure, an attaching members (3a,4a), equipped with either a light-emitting member or light-reflecting member, is attached in a fixed condition so as to cover a loop (2).

## Description

The present invention relates to the structure of a loop chain.

Loop chains have been used for some time to establish restricted entry boundaries for parking garages and off limits areas, for example.

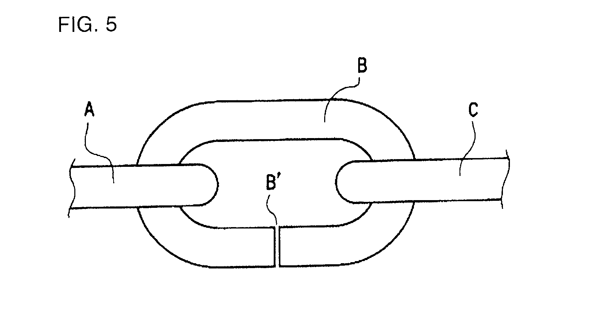

As shown by one portion of a chain of Fig. 5, a loop chain such as this is constituted by loops A, B, C and so forth, made from either metal or plastic.

With reference to the figure, this structure will be simply explained by focusing on loop B. In general, a loop is constituted by forming a cylindrical element into an elliptical shape, and such an element can be integrally formed in the forming process. B' is the joint portion, and after interlinking loops A and C, [this joint portion] is secured as needed by either welding or bonding.

This loop chain can be used in various ways. For example, when utilizing a loop chain for establishing a restricted entry boundary for a parking garage, off limits area or the like, at night and other times when visibility is poor, there is an extremely high risk of people and vehicles running into the loop chain because they are unable to discern its presence. As a safety measure to prevent this, loop chains were constituted so as to be discernible to the naked eye by either using a phosphorescent material as the loop chain material, or covering the loop chain with reflective plating or a luminous material.

However, in the structure of a conventional loop chain constituted as described hereinabove, when a phosphorescent material was used as the loop chain material, the effect thereof disappeared when the life of the phosphorescent material expired, and loop chains that were simply mounted with reflective plating or a phosphorescent material suffered from problems such as the covering easily coming off, and a poor appearance from the design standpoint.

An object of the present invention is to provide a further improved loop chain that solves for the above problems.

In order to achieve this object, the gist of the structure of a loop chain according to Claim 1 is that an attaching member covers the periphery of this loop, and this attaching member is formed by an upper member and a lower member, and is capable of being attached to this loop in a fixed condition.

The gist of the structure of a loop chain according to Claim 2 is that a combination of the upper member and the lower member of the attaching member is formed such that one end thereof is hinged and the other end thereof is open, so as to be able to sandwich said loop in a fixed condition.

The gist of the structure of a loop chain according to Claim 3 is that the attaching member is integrally provided with an engaging tab having an engaging portion so that an adapter, which is attachable/detachable from the outside and has a latching portion, can be attached thereto.

The gist of the structure of a loop chain according to Claim 4 is that a mating portion corresponding to the periphery of the loop is formed on the inner surface of the upper member and lower member of the attaching member.

The gist of the structure of a loop chain according to Claim 5 is that a series of protruding ridges is formed on portions of the top and bottom parts of the outer surface of the loop, and a series of notches corresponding to these protruding ridges of the loop is formed in the upper member and lower member of the attaching member attached to this loop.

The gist of the structure of a loop chain according to Claim 6 is that either a light-reflecting member or a light-emitting member is provided on the above-mentioned attaching member.

The gist of the structure of a loop chain according to Claim 7 is that either a light-reflecting member or a light-emitting member is provided on said attaching member.

The gist of the structure of a loop chain according to Claim 8 is that the loop is formed from a phosphorescent material.
Fig. 1 is a relational exploded view showing a typical example of one loop of a loop chain of the present invention.
Fig. 2 is a relational expanded plan view of elements shown in Fig. 1.
Fig. 3 is a relational partial view showing the attachment of an adapter of the present invention.
Fig. 4 is a relational exploded view of another embodiment of the present invention.
Fig. 5 is a relational plan view showing a conventional loop chain.

In the following, the embodiments of the structure of a loop chain of the present invention will be explained on the basis of the figures.

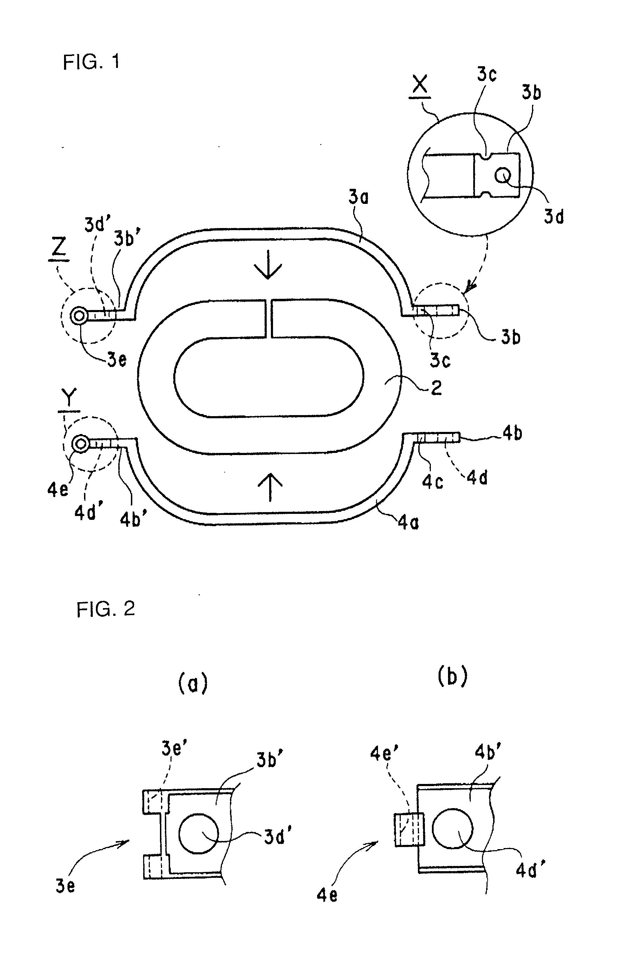

Fig. 1 is a relational exploded view showing a typical example of elements related to one loop of a loop chain of the present invention.

Fig. 2 is a relational expanded plan view of the Z and Y portions of Fig. 1.

Firstly, the assembly and attaching of related members, such as attaching members 3a, 4a, loop 2, and hinge portions 3e, 4e will be explained by referring to Fig. 1 and Fig. 2.

Hinge portions 3e, 4e (refer to Fig. 2 for details) are disposed on attaching members 3a, 4a, respectively, and these hinge portions and a pin, which is not shown in the figures, constitute a hinge mechanism. By virtue of this hinge mechanism, attaching members 3a, 4a cover loop 2 by sandwiching it (in the direction of the arrows in Fig. 1), and assembly is completed by fastening coupling tabs 3b and 4b of the end portions.

Next, an explanation of each related portion will continue to be given based on Fig. 1 and Fig. 2.

Although not shown in the figures, the cross-section of loop 2 is circular, and attaching members 3a, 4a are wide and the insides are circular arcs so as to correspond to the periphery of this loop 2.

The X in the figure is a diagram showing the related portions of the portion indicated by the arrow as seen from the plan view, showing the periphery of 3b, which is the end portion of attaching member 3a, where 3c is a latching groove, and 3d is a coupling hole (which can also be used as an element for fastening). Further, the periphery of 4b, which is the end portion of attaching member 4a, also constitutes the same shape, 4b is an engaging tab, 4c is a latching groove, and 4d is a coupling hole (which can also be used as an element for fastening).

The Z, Y portions in the figure show the hinge mechanism portion of the end portion peripheries of attaching members 3a and 4a, and will be explained in detail by referring to Fig. 2 (a) and (b).

Fig. 2 (a) shows a plan view of a relational diagram of the Z portion of Fig. 1, and on the engaging tab 3b' side of the end portion of attaching member 3a, 3d' is a coupling hole. Fig. 2 (b) shows a plan view of a relational diagram of the Y portion of Fig. 1, and on the engaging tab 4b' side of the end portion of attaching member 4a, 4d' indicates a coupling hole.

The hinge mechanism is constituted by combining the two hinge portions 3e, 4e, and inserting a pin not shown in the figure through the respective through holes 3e' and 4e'.

Furthermore, the attachment of the above-mentioned loop and attaching members is not limited to this embodiment, and, referring to the hinge mechanism, there is also a hinge mechanism in which both parts are folding portions based on the integral formation of attaching members 3a, 4a. Further, both end portions of attaching members 3a, 4a (3b, 3b', 4b, 4b') can also be fastened by mechanically sandwiching loop 2.

This mechanical fastening can also be done by using screws or by providing a locking structure formed by a spring at the opposite ends.

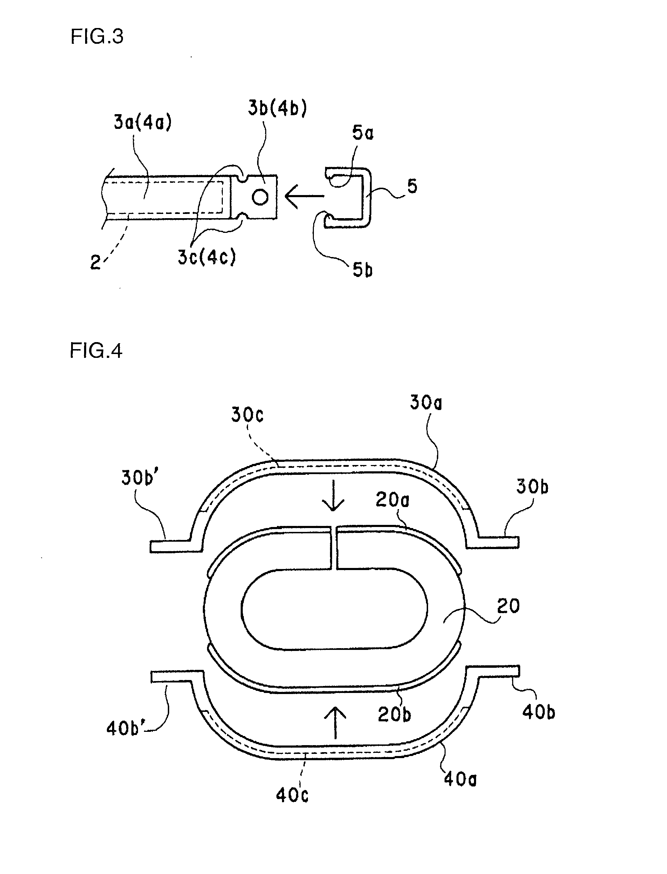

Next, an adapter related to the present invention will be explained using Fig. 3.

The figure shows an adapter and related portions, by which attaching members 3a (4a) are attached to loop 2.

Either a light-reflecting member or a light-emitting member is applied to adapter 5, and it is coupled by being slid onto engaging tab 3b (4b) in the direction of the arrow in the figure, and the latching pawls 5a and 5b couple and lock with latching grooves 3c and 4c.

Next, another embodiment of the present invention will be explained on the basis of Fig. 4.

Furthermore, since the attachment, detailed structure and constitution of the attaching members relative to the loop have been described in detail using Fig. 1 through Fig. 3 above, this explanation will be omitted here.

In the figure, elongated protruding ridges 20a, 20b are disposed on the top and bottom portions of the periphery of loop 20.

Elongated opening portions 30c, 40c and coupling end portions (portions equivalent to the engaging tabs) 30b, 30b', 40b, 40b' are respectively disposed on attaching members 30a, 40a, which are constituted so as to cover loop 20.

Therefore, the connection of loop 20 and attaching members 30a, 40a is done such that each attaching member covers loop 20 as indicated by the arrows in the figure, and the coupling end portions (portions equivalent to the engaging tabs) 30b, 30b', 40b, 40b' are attached and fastened.

In the post-attachment state, the elongated protruding ridges 20a, 20b of loop 20, which are not shown in detail in the figure, mate with the elongated opening portions 30c, 40c of attaching members 30a, 40a.

When a luminous material is applied to loop 20, and this is used in combination with attaching members, which are provided with the same kinds of members, the result is an easy-to-see loop chain that conforms to the present invention, and one that has been enhanced from the standpoint of design.

The invention devised by the inventors has been explained in detail hereinabove on the basis of the embodiments, but it goes without saying that the present invention is not limited to the above-mentioned embodiments, and can be modified in various ways within a scope that does not deviate from the gist thereof.

For example, the physical properties of the attaching members can be plastic, metal, another non-metallic material, or a combination thereof. The same holds true for the physical properties of a loop as well.

Furthermore, in the description of the present invention, there is an explanation of a light-emitting member, but this also comprises a luminous member.

As explained hereinabove, according to the present invention, because freely detachable attaching members equipped with either light-emitting members or light-reflecting members, for example, are attached to the respective loops of a loop chain, the structure is such that these attaching members can be easily attached at locations of arbitrary loops, and adapters equipped with various light-related members can also be attached.

Because of this, attaching members, which are equipped with either light-emitting members or light-reflecting members, and various adapters are easily attached to a loop chain, and this attachment is secure, thus eliminating concerns about these members falling off.

Further, when the life of a luminous member or the like expires, either attaching members or adapters equipped with either light-emitting members or light-reflecting members can be easily attached, or this luminous member can be replaced.

Further, combining a loop, which utilizes a luminous member, with the above-mentioned attaching members constitutes an easy-to-see loop chain that conforms to the present invention, and one that has been enhanced from the standpoint of design.

Accordingly, a loop chain of the present invention, which is used to establish a restricted entry boundary for a parking garage or an off limits area, for example, constitutes a loop chain that has been adapted for uses not available in the past.

## Claims

1. A loop chain structure formed by coupling loops, wherein an attaching member, that covers the periphery of each of said loops, is formed by an upper member and a lower member, and is capable of being attached to the loop in a fixed condition.

2. The loop chain structure according to Claim 1, wherein a combination of the upper member and the lower member of said attaching member is formed such that one end thereof is hinged and the other end thereof is open, so as to be able to sandwich said loop in a fixed condition.

3. The loop chain structure according to Claims 1 or 2, wherein said attaching member is integrally provided with an engaging tab having an engaging portion so that an adapter, which is attachable/detachable from the outside and has a latching portion, can be attached thereto.

4. The loop chain structure according to Claims 1 or 2, wherein a mating portion corresponding to the periphery of said loop is formed on the inner surface of said upper member and lower member of said attaching member.

5. The loop chain structure according to Claims 1 or 2, wherein a series of protruding ridges is formed on portions of the top and bottom parts of the outer surface of said loop, and a series of notches corresponding to these protruding ridges of said loop is formed in the upper member and lower member of the attaching member attached to this loop.

6. The loop chain structure according to Claims 1 or 2, wherein either a light-reflecting member or a light-emitting member is provided on said attaching member.

7. The loop chain structure according to Claim 3, wherein either a light-reflecting member or a light-emitting member is provided on said adapter.

8. The loop chain structure according to Claim 1, wherein said loop is formed from a phosphorescent material.
